# EUROPEAN PATENT SPECIFICATION

(11) **EP 3 789 530 B1**
(45) Date of publication and mention of the grant of the patent: **07.06.2023**
(21) Application number: 20193606.9
(22) Date of filing: 31.08.2020
(51) Int. Cl.: D06F 39/10, D06F 58/04, D06F 58/22, B01D 29/35, B01D 35/30, D06F 25/00

(54) **A FILTER GROUP SUITABLE FOR USE IN LAUNDRY WASHING AND/OR DRYING MACHINES**
FILTERGRUPPE ZUR VERWENDUNG IN WASCH- UND/ODER TROCKNUNGSMASCHINEN
GROUPE DE FILTRE APPROPRIÉ POUR UNE UTILISATION DANS DES LAVE-LINGE ET/OU SÈCHE-LINGE

(30) Priority: 05.09.2019 TR 201913423
(43) Date of publication of application: 10.03.2021
(73) Proprietor: Arçelik Anonim Sirketi, 34445 Istanbul (TR)
(72) Inventor: TOP, Ahmet Burak, 34445 ISTANBUL (TR); YESILCUBUK, Alper, 34445 ISTANBUL (TR); TARKUC, Simge, 34445 ISTANBUL (TR); GULBAY, Berrin, 34445 ISTANBUL (TR); KARTAL, Resul, 34445 ISTANBUL (TR)

(56) References cited:
- EP-A1- 2 870 283
- JP-A- 2013 198 756
- US-A1- 2009 321 341
- US-A1- 2018 290 082

## Description

The present invention relates to a filter group suitable for use in laundry washing and/or drying machines.

The laundry washing and/or drying machines comprise a drum for washing and/or drying the laundry therein. The laundry is washed by using a fluid which is a mixture of water and detergent in the drum in the washing machines and is dried by using a gaseous fluid which is preferably air in the drying machines. In order to realize a more efficient laundry washing and/or drying process the laundry is tumbled together with the drum in the drum. Fibers-lint breaking off from the laundry during these operations mix into the fluid and transferred to the next washing and/or drying step together with the fluid or discharged out of the machine together with the fluid.

In the state of the art laundry washing and/or drying machines, filters are used to remove foreign particles such as fibers-lints, etc. mixing into the fluid from the fluid. The state of the art filters generally comprise a filtering member which is placed onto a planar frame and which has pores with a certain size. While the fluid passes through said filter, foreign particles which are larger than the pores of the filtering member are collected on the filtering member, thus ensuring that the the fluid is cleansed of foreign particles which are larger than a certain size, that is the size of the pores of the filtering member. However, since said filtering members are supported by the planar frames, the former may have a limited active filtration surface. Therefore, said filtering members get clogged in a very short time and fail to carry out their functions. In such a case, if the filtering members are clogged, the user cleans the filtering member and use the same again or replaces the filter. In both cases, the user has to spend effort.

Moreover, in the state of the art, the use of circular filters disposed into the drum is also known. Said filters move together with the laundry as a result of the rotational movement in the drum. The movement of the filters together with the laundry accelerates the mechanical wear of the laundry. Furthermore, the users have to put said filter into the drum together with the laundry before each washing and/or drying process. In this case, if the user forgets to put the filter into the drum, foreign particles such as fibers, lints, etc. breaking off from the laundry are not filtered and are released to the environment or cause damage to the machine.

In the state of the art United States Patent Document No. US5531891, a washing machine is disclosed, comprising a filter which is disposed at the outlet of the washing machines and which filters the fibers-lint breaking off from the laundry.

In the state of the art Japanese patent document No. JP2013198756, a clothes dryer having a lint capture device in a circulation air passage communicating with a drying tank is disclosed.

In the state of the art European patent document No. EP2870283, a laundry dryer comprising an air-filtering cartridge which is fitted in removable manner into an air-vent is disclosed.

In the state of the art United States patent document No. US2018290082, a household wastewater filter is disclosed.

In the state of the art United States patent document No. US2009321341, a filter system for fluids is disclosed.

The aim of the present invention is the realization of a filter group with increased active filtration area, suitable for use in laundry washing and/or drying machines.

The filter group realized in order to attain the aim of the present invention, explicated in the first claim and the respective claims thereof, which is suitable for use in laundry washing and/or drying machines, comprises at least one body which defines a volume therein and which has a plurality of openings thereon in communication with said volume; at least one plate which is disposed on at least one side of the body and which has at least one inlet port in fluid communication with the volume so as to allow the fluid to be filtered to be taken into the volume; and at least one filtering member which is placed onto the body so as to cover the openings and which has a plurality of pores with dimensions allowing the fluid taken into the volume to pass therethrough so as to leave the volume and preventing the passage of foreign particles such as fibers, lints, etc. with a size above a certain volume in the fluid. In an embodiment of the present invention, the body has the form of a hollow three-dimensional solid body, for example having a prismatic structure, composed of joining a plurality of sides. In an embodiment of the present invention, at least one opening is arranged on each side of the body and the filtering member covers each of said openings. In an embodiment of the present invention, the size of the pores of the filtering member is preferably between 5 to 150 microns. In an embodiment wherein the size of the pores is 150 microns, while the fluid taken into the volume defined in the body passes through the filtering member so as to leave the body, foreign particles such as fibers, lints, etc. in the fluid with a size larger than 150 microns cannot pass through the pores and are accumulated on the surface of the filtering member facing the volume. Thus, the fluid taken into the volume is cleansed of foreign particles larger than a certain value and then discharged from the body. In an embodiment of the present invention, the plate is configured so as to be placed to the section of the laundry washing and/or drying machine where the filter group is used. In an embodiment of the present invention, the plate is detachably attached to the relevant side of the body. In the filter group of the present invention, for example in the laundry washing and/or drying machine, the fluid used for treating the laundry and thus containing foreign particles such as fibers, lints, etc. fills into the volume defined in the body through the inlet port. The fluid in the volume then flows towards the filtering members covering the openings on the body and passes through the filtering members to be discharged from the body. At the same time, foreign particles in the fluid with a size larger than the size of the pores of the filtering member cannot pass through the filtering member and are accumulated on the surface of the filtering member facing the interior of the volume. Thus, the fluid is cleansed of foreign particles. In the filter group of the present invention, as the body comprises a plurality of openings on a plurality of sides thereof, which are covered by the filtering member, the active filtration area of the filter group is increased, and thus both the time required for the filtration process is decreased and the economic life of the filtering members is increased.

In an embodiment of the present invention, the body has an inclined surface comprising at least one opening covered by the filtering member. In a derivative of this embodiment, the body has an almost drop shape with the opening and the filtering member covering the opening being provided on at least one inclined surface thereof. By means of the inclined surface whereon the filtering member is provided, a height difference is formed between the two ends of said surface. The fluid filtered at the higher end by means of the filtering member quickly flow towards the lower end with the effect of the gravity thanks to the inclination between the two ends of the surface, and thus the fluid is prevented from accumulating on the filtering member. Thus, the fluid is filtered in a shorter time and the fluid is enabled to make less pressure on the filtering member during the filtration process, increasing the economic life of the filtering member. In an alternative embodiment of the present invention, the body has an almost L shape.

In an embodiment of the present invention, at least one filtering member is provided on the plate. By means of the filtering member provided on the plate, the filtration process is also performed at the side of the body whereto the plate is attached, thus further increasing the active filtration area of the filter group.

In an embodiment of the present invention, the filter group comprises a plurality of nested bodies. In other words, in this embodiment, the filter group comprises a plurality of bodies with different sizes, and said bodies are grouped such that the smaller body is positioned in the larger body so as to cover a portion of the volume defined in the larger body. In a derivative of this embodiment, the filter group comprises a single plate which covers the relevant sides of all the nested bodies, and the inlet port arranged on the plate is positioned on the plate so as to be in fluid communication with the volume defined by the innermost body among the nested bodies. In this embodiment, the fluid to be filtered is taken into the volume defined by the innermost body through the inlet port, and the filtration process starts with the filtering member on the innermost body and ends with the filtering member on the outermost body. Thus, the fluid is enabled to be gradually filtered and the utilization rates of the filtering members are decreased, in other words, the amount of foreign particles collected on each filtering member is reduced, thus increasing the economic life of the filtering members. In a derivative of said embodiment, the size of the pores of the filtering member on the innermost body among the nested bodies is larger than the size of the pores of the filtering member on the outermost body. By gradually performing the filtration process with a plurality of filtering members instead of a single filtering member, the economic life of the filtering member is increased.

The filter group further comprises at least one casing wherein the body is preserved. By placing the body into the casing, the filtering member is prevented from being damaged for example due to external impacts which may occur during the transportation.

In an embodiment of the present invention, the casing is in the form of a hollow box with at least one side thereof being open. In this embodiment, the body is inserted through the open side of the casing, and the plate is positioned in the casing so as to cover the open side of the casing. In other words, said plate serves as a wall covering the open side of the casing, defining a closed volume in the casing isolated from the outer environment and containing the body.

In an embodiment of the present invention, the casing comprises at least one slot and the body comprises at least one protrusion suitable for entering said slot. In this embodiment, by inserting the protrusion on the body into said slot arranged on one of the walls of the casing facing the interior thereof, the body is placed into the casing. Thanks to the easy placement of the body into the casing by means of such a simple slot-protrusion structure, ease of use and economic advantages are provided.

The casing comprises at least one outlet opening which allows the fluid filtered by the filtering member to leave the casing. In this embodiment, the fluid filtered by the filtering member leaves the casing through the outlet opening. In an embodiment of the present invention, a plurality of outlet openings may be provided on the casing, said outlet openings can be arranged so as to create shapes such as honeycomb, grill, etc. on the casing in a manner to facilitate the flow of the fluid.

In an embodiment of the present invention, the casing comprises an inclined base almost at the end of which the outlet opening is provided. In this embodiment, by positioning the outlet opening at the end of the inclined base, the fluid leaving the volume through the filtering member is enabled to be guided by means of the inclination of the base so as to quickly reach the outlet opening and to leave the casing from there. Thus, the filtration process is performed in a short period of time.

In an embodiment of the present invention, the casing comprises at least one ventilation hole thereon which allows the passage of air. In this embodiment, by means of the air entering through the ventilation hole especially in case a liquid fluid is being filtered by the filter group, the filter group is quickly dried, preventing the formation of bacteria, mold, yeast, etc. which may cause problems of hygiene or bad odor.

At least one side of the body is open. In this embodiment, the user can access the volume defined in the body via the open side and easily clean the foreign particles accumulated in the volume and/or the surface of the filtering member facing the interior of the volume.

In an embodiment not forming part of the present invention, the filter group further comprises at least one lid which is disposed on the open side of the body so as to move between a first position for providing access into volume and a second position for preventing access into the volume. Thus, the user can shift the lid to the first position and access the volume if a high amount of foreign particles is accumulated on the filtering members and/or in the volume defined in the body, and can clean the filter group.

The body comprises at least one sealing member which is disposed so as to surround the periphery of the open side while the casing comprises at least one housing which is configured to bear said sealing member while the body is being placed into the casing. The housing is preferably arranged on an inner wall of the casing. In this embodiment, by placing the body into the casing by means of a sealing member such as gasket, etc. surrounding the open side, the fluid is prevented from leaking between the open side and the casing and from leaving the volume without being filtered.

In an embodiment of the present invention, at least one portion of the filter group comprises an antimicrobial coating material. The coating member is preferably provided on the surfaces of the body facing the interior of the volume. The coating material is preferably silver based. Thus, the rate of the formation of microbes in the filter group for example due to foreign particles such as fibers, lints, etc. accumulated in the course of time is minimized or reduced to zero.

The present invention also relates to a laundry washing and/or drying machine comprising a filter group of the above-described type. Said filter group can be placed for example into the drum and/or the detergent dispenser and/or a special area such as the tub determined in the body of the laundry washing and/or drying machine, or can be connected to a fluid line arranged inside the laundry washing and/or drying machine by means of the inlet port and the outlet opening.

By means of the present invention, in the filter group suitable to be used in the laundry washing and/or drying machines, by means of a plurality of filtering members placed so as to cover the openings arranged on a plurality of sides of the body, the active filtration area of the filter group is increased, and thus both the time required for the filtration process is decreased and the economic life of the filtering members is increased.

The filter group realized in order to attain the aim of the present invention is illustrated in the attached figures, where:
Figure 1 - is the perspective view of an embodiment of the filter group of the present invention where there is no filtering member on the body.
Figure 2 - is the perspective view of an embodiment of the filter group of the present invention where there is a filtering member on the body.
Figure 3 - is the partially exploded perspective view of an embodiment of the filter group of the present invention.

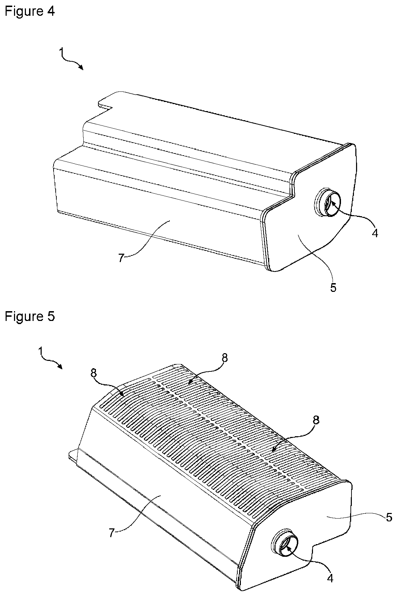

Figure 4 - is the perspective view of an embodiment of the filter group of the present invention where the body is placed into the casing.
Figure 5 - is another perspective view of an embodiment of the filter group of the present invention where the body is placed into the casing.
Figure 6 - is the perspective view of another embodiment of the filter group of the present invention where there is no filtering member.

The elements illustrated in the figures are numbered as follows:
1. Filter group
2. Opening
3. Body
4. Inlet port
5. Plate
6. Filtering member
7. Casing
8. Outlet opening
9. Sealing member

### V. Volume

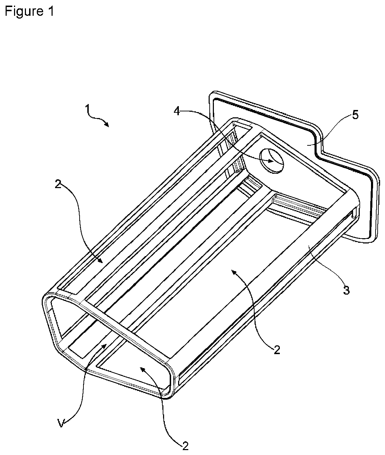

The filter group (1) of the present invention suitable to be used in the laundry washing and/or drying machines comprises at least one body (3) which defines a volume (V) almost completely isolated from the outer environment and which has a plurality of openings (2) thereon; at least one plate (5) which covers at least one side of the body (3) and which has at least one inlet port (4) allowing the fluid to be filtered to enter the volume (V); and at least one filtering member (6) which is placed onto the body (3) so as to cover the openings (2) and which has pores at least allowing the passage of the fluid therethrough so as to allow the fluid taken into the volume (V) to leave the volume (V). In an embodiment of the present invention, there are openings (2) covered by the filtering member (6) on all the sides of the body (3) not connected to the plate (5) (Figure 1). In an embodiment of the present invention, the size of the pores of the filtering member (6) is preferably between 5 to 150 microns. The plate (5) is configured so as to allow the body (3) to be placed in the laundry washing and/or drying machine, for example in a drum wherein the laundry washing and/or drying process is performed and/or the detergent dispenser and/or a special area determined in the body. In the filter group (1), the fluid containing foreign particles such as fibers, lints, etc. with a certain size enters the volume (V) defined in the body (3) through the inlet port (4). In an embodiment of the present invention, the inlet port (4) is configured to be connected to a fluid line arranged in the laundry washing and/or drying machine. While the fluid entering the volume (V) through the inlet port (4) leaves the volume (V) through the filtering member (6), the foreign particles with a size larger than the pores of the filtering member (6) are prevented from leaving said volume (V) and said particles are removed from the fluid and retained in the volume (V), thus performing the filtration of the fluid. In the filter group (1) of the present invention, by means a plurality of openings (2) which are covered by the filtering member (6), the active filtration area of the filter group (1) is increased, and thus both the time required for the filtration process is decreased and the economic life of the filtering member (6) is increased.

In an embodiment of the present invention, the body (3) has an inclined surface comprising at least one opening (2) covered by the filtering member (6). In this embodiment, by means of the inclined surface whereon the filtering member (6) is provided, a height difference is formed between the two ends of the body (3). The fluid filtered at the higher end quickly flow towards the lower end thanks to the inclination between the two ends of the body (3), and thus the fluid is prevented from accumulating on the filtering member (6). Thus, the fluid is filtered in a shorter time and is enabled to make less pressure on the filtering member (6), increasing the economic life of the filtering member (6). In an alternative embodiment of the present invention, the body (3) has an almost L shape.

In an embodiment of the present invention, the plate (5) comprises at least one filtering member (6) thereon. In this embodiment, the filtration process is performed at the side of the body (3) whereto the plate (5) is connected, thus further increasing the active filtration area.

In an embodiment of the present invention, the filter group (1) comprises at least two nested bodies (3). Preferably, a single plate (5) covers the relevant sides of all the nested bodies (3), and the inlet port (4) arranged on said plate (5) is aligned so as to be in fluid communication with the volume (V) defined by the innermost body (3). In this embodiment, the fluid to be filtered is taken into the volume (V) defined by the innermost body (3) through the inlet port (4), and the filtration process starts with the filtering member (6) on the innermost body (3) and ends with the filtering member (6) on the outermost body (3). Thus, the fluid is enabled to be gradually filtered and the utilization rates of the filtering members (6) are decreased, increasing the economic life of the filtering members (6). In a derivative of said embodiment, the size of the pores of the filtering member (6) on the innermost body (3) is larger than the size of the pores of the filtering member (6) on the outermost body. By gradually performing the filtration process with a plurality of filtering members (6) instead of a single filtering member (6), the economic life of the filtering member (6) is increased.

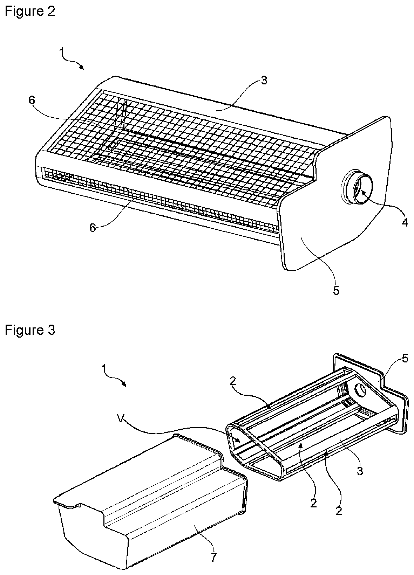

The filter group (1) further comprises at least one casing (7) wherein the body (3) is placed. By placing the body (3) into the casing (7), the filtering member (6) on the body (3) is prevented from being damaged for example due to external impacts which may occur during the transportation (Figure 3).

In an embodiment of the present invention, the casing (7) is in the form of a hollow box with at least one side thereof being open. In this embodiment, the body (3) is inserted into the casing (7) through the open side of the casing (7) and the open side of the casing (7) is covered by the plate (5) when the body (3) is inserted into the casing (7).

In an embodiment of the present invention, the casing (7) comprises at least one slot (not shown in the figures) and the body (3) comprises at least one protrusion (not shown in the figures) suitable for entering said slot. In this embodiment, while the body (3) is being placed into the casing (7), the protrusion on the body (3) is inserted into the slot so as to ensure the placement of the body (3) into the casing (7). Thanks to the easy placement of the body (3) into the casing (7) by means of such a simple slot-protrusion structure, ease of use and economic advantages are provided.

The casing (7) comprises at least one outlet opening (8) which allows the fluid filtered by the filtering member (6) to be discharged. In this embodiment, the fluid filtered by the filtering member (6) is enabled to leave the casing (7) through the outlet opening (8). In an embodiment of the present invention, a plurality of outlet openings (8) are provided on the casing (7), and said outlet openings (8) can be arranged so as to create shapes such as honeycomb, grill, etc. on the casing in a manner to facilitate the flow of the fluid.

In an embodiment of the present invention, the casing (7) comprises an inclined base almost at the end of which the outlet opening (8) is positioned. In this embodiment, by positioning the outlet opening (8) at the end of the inclined base, the fluid leaving the volume (V) through the filtering member (6) is enabled to be guided by means of the inclination of the base so as to quickly reach the outlet opening (8). Thus, the filtration process is performed in a short period of time.

In an embodiment of the present invention, the casing (7) comprises at least one ventilation hole (not shown in the figures) thereon which allows the entry and exit of air. In this embodiment, by means of the air entering through the ventilation hole especially in case a liquid fluid is being filtered by the filter group (1), the filter group (1) is quickly dried, preventing the formation of bacteria, mold, yeast, etc. which may cause problems of hygiene or bad odor.

At least one side of the body (3) is open. In this embodiment, the user can access the volume (V) defined in the body (3) via the open side and easily clean the foreign particles accumulated in the volume (V)

In an embodiment not forming part of the present invention, the filter group (1) further comprises at least one lid (not shown in the figures) which is disposed on the open side of the body (3) so as to move between a first position for providing access into volume (V) and a second position for preventing access into the volume (V). Thus, the user can shift the lid to the first position and access the volume (V) if a high amount of foreign particles is accumulated on the filtering members (6) and/or in the volume (V) defined in the body (3), and can clean the filter group (1).

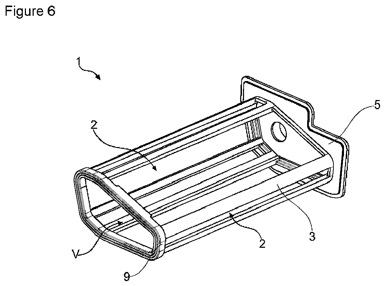

The body (3) comprises at least one sealing member (9) which is disposed so as to surround the periphery of the open side while the casing (7) comprises at least one housing (not shown in the figures) which enables said sealing member (9) to be seated (Figure 6). In this embodiment, by placing the body (3) into the casing (7) by means of a sealing member (9) such as gasket, etc. surrounding the open side, the fluid is prevented from leaking between the volume (V) and the casing (7) through the open side.

In an embodiment of the present invention, at least one portion of the filter group (1) comprises an antimicrobial coating material. The coating member is preferably provided on the surfaces of the body (3) facing the interior of the volume (V). The coating material is preferably silver based. Thus, the rate of the formation of microbes in the filter group (1) for example due to foreign particles such as fibers, lints, etc. accumulated in the course of time is minimized or reduced to zero.

The present invention also relates to a laundry washing and/or drying machine comprising a filter group (1) of the above-described type. Said filter group (1) can be placed for example into the drum and/or the detergent dispenser and/or a special area determined in the body of the laundry washing and/or drying machine, or can be connected to a fluid line arranged inside the laundry washing and/or drying machine by means of the inlet port (4) and the outlet opening (8).

By means of the present invention, in the filter group (1) suitable to be used in the laundry washing and/or drying machines, by means of a plurality of filtering members (6) placed so as to cover the openings (2) arranged on a plurality of sides of the body (3) in a manner to allow the passage of the fluid, the active filtration area of the filter group (1) is increased, and thus both the time required for the filtration process is decreased and the economic life of the filtering members (6) is increased.

## Claims

1. A filter group (1) suitable to be used in the laundry washing and/or drying machines, having at least one body (3) which defines a volume (V) almost completely isolated from the outer environment and which has a plurality of openings (2) thereon; at least one plate (5) which covers at least one side of the body (3) and which has at least one inlet port (4) allowing the fluid to be filtered to enter the volume (V); and at least one filtering member (6) which is placed onto the body (3) so as to cover the openings (2) and which has pores allowing the passage of the fluid therethrough so as to allow the fluid taken into the volume (V) to leave the volume (V), at least one casing (7) in which the body (3) is placed and which comprises at least one outlet opening (8) which allows the fluid filtered by the filtering member (6) to be discharged and at least one side of the body (3) is open so as to allow access to the interior of the volume (V) **characterized by** the body (3) which comprises at least one sealing member (9) which is disposed so as to surround the periphery of the open side and by the casing (7) which comprises at least one housing which enables said sealing member (9) to be seated.

2. A filter group (1) as in Claim 1, **characterized by** the body (3) which has an inclined surface comprising at least one opening (2) covered by the filtering member (6).

3. A filter group (1) as in Claim 1 or 2, **characterized by** the plate (5) which comprises at least one filtering member (6) thereon.

4. A filter group (1) as in any one of the above claims, **characterized by** at least two nested bodies (3).

5. A filter group (1) as in any one of the above claims, **characterized by** the casing (7) which is in the form of a hollow box with at least one side thereof being open.

6. A filter group (1) as in any one of the above claims, **characterized by** the casing (7) which comprises at least one slot and by the body (3) which comprises at least one protrusion suitable for entering said slot.

7. A filter group (1) as in any one of the above claims, **characterized by** the casing (7) which comprises an inclined base almost at the end of which the outlet opening (8) is positioned.

8. A filter group (1) as in any one of the above claims, **characterized by** the casing (7) which comprises at least one ventilation hole thereon which allows the entry and exit of air.

9. A filter group (1) as in any one of the above claims, at least one portion of which comprises an antimicrobial coating material.

10. A laundry washing and/or drying machine comprising a filter group (1) as in any one of the above claims.

## Patentansprüche

1. Eine Filtergruppe (1), die geeignet ist, in Waschmaschinen und/oder Wäschetrocknern verwendet zu werden, umfasst mindestens einen Körper (3), der ein Volumen (V) definiert, das fast vollständig von der äußeren Umgebung isoliert ist, und der eine Vielzahl von Öffnungen (2) daran aufweist, mindestens eine Platte (5), die mindestens eine Seite des Körpers (3) bedeckt und die mindestens eine Einlassöffnung (4) aufweist, die es dem zu filternden Fluid ermöglicht, in das Volumen (V) einzutreten; und mindestens ein Filterelement (6), das auf dem Körper (3) angeordnet ist, um die Öffnungen (2) zu bedecken, und das Poren aufweist, die den Durchgang des Fluids dort hindurch ermöglichen, um es dem Fluid zu ermöglichen, die in das Volumen (V) aufgenommene Flüssigkeit das Volumen (V) verlassen zu lassen, mindestens ein Gehäuse (7), in dem der Körper (3) angeordnet ist und das mindestens eine Auslassöffnung (8) umfasst, die es ermöglicht, das durch das Filterelement (6) gefilterte Fluid abzuführen, und mindestens eine Seite des Körpers (3) offen ist, um Zugang zum Inneren des Volumens (V) zu ermöglichen, **gekennzeichnet ist es dadurch,** dass der Körper (3), der mindestens ein Dichtungselement (9) umfasst, das so angeordnet ist, dass es den Umfang der offenen Seite umgibt, und das Gehäuse (7), das mindestens ein Gehäuse umfasst, das es dem Dichtungselement (9) ermöglicht, fest zu sitzen.

2. Eine Filtergruppe (1), wie in Anspruch 1 aufgeführt, **ist dadurch gekennzeichnet, dass** der Körper (3) eine geneigte Oberfläche aufweist, mindestens eine Öffnung (2) umfasst, die von dem Filterelement (6) bedeckt ist.

3. Eine Filtergruppe (1), wie in Anspruch 1 oder 2 aufgeführt, **ist dadurch gekennzeichnet, dass** die Platte (5) mindestens ein Filterelement (6) darauf aufweist.

4. Eine Filtergruppe (1), wie in einem der vorherigen Ansprüchen aufgeführt, **ist dadurch gekennzeichnet, dass** es mindestens zwei ineinander geschachtelte Körper (3) aufweist.

5. Eine Filtergruppe (1), wie in einem der vorherigen Ansprüchen aufgeführt, **ist dadurch gekennzeichnet, dass** das Gehäuse (7) als Hohlkasten ausgebildet ist, dessen mindestens eine Seite offen ist.

6. Eine Filtergruppe (1), wie in einem der vorherigen Ansprüchen aufgeführt, **ist dadurch gekennzeichnet, dass** das Gehäuse (7) mindestens einen Schlitz umfasst und dass der Körper (3) mindestens einen Vorsprung umfasst, der geeignet ist, in den Schlitz einzutreten.

7. Eine Filtergruppe (1), wie in einem der vorherigen Ansprüchen aufgeführt, **ist dadurch gekennzeichnet, dass** das Gehäuse (7) einen geneigten Boden aufweist, an dessen Ende sich fast die Auslassöffnung (8) befindet.

8. Eine Filtergruppe (1), wie in einem der vorherigen Ansprüchen aufgeführt, **ist dadurch gekennzeichnet, dass** das Gehäuse (7) mindestens ein Belüftungsloch daran aufweist, das den Eintritt und Austritt von Luft ermöglicht.

9. Eine Filtergruppe (1), wie in einem der vorherigen Ansprüchen aufgeführt, umfasst mindestens ein Teil, das ein antimikrobielles Beschichtungsmaterial umfasst.

10. Eine Waschmaschine / Trockner umfasst eine Filtergruppe (1), wie in einem der vorherigen Ansprüchen aufgeführt.

## Revendications

1. Un groupe filtrant (1) utilisable dans les machines à laver et/ou à sécher le linge, comportant au moins un corps (3) définissant un volume (V) presque totalement isolé de l'environnement extérieur et comportant une pluralité d'ouvertures (2) ; au moins une plaque (5) recouvrant au moins un côté du corps (3) et comportant au moins un orifice d'entrée (4) permettant au fluide à filtrer de pénétrer dans le volume (V) et au moins un élément filtrant (6) qui est placé sur le corps (3) de manière à recouvrir les ouvertures (2) et qui présente des pores permettant le passage du fluide à travers celles-ci de manière à permettre au fluide introduit dans le volume (V) de sortir du volume (V), au moins une enveloppe (7) dans laquelle le corps (3) est placé et qui comprend au moins une ouverture de sortie (8) permettant l'évacuation du fluide filtré par l'élément filtrant (6) et au moins un côté du corps (3) est ouvert pour permettre l'accès à l'intérieur du volume (V) **caractérisé par** le corps (3) qui comprend au moins un élément d'étanchéité (9) qui est disposé de manière à entourer la périphérie du côté ouvert et par l'enveloppe (7) qui comprend au moins un logement permettant la mise en place de cet élément d'étanchéité (9).

2. Un groupe filtrant (1) selon la Déclaration 1, **caractérisé par** le corps (3) qui présente une surface inclinée comprenant au moins une ouverture (2) recouverte par l'élément filtrant (6).

3. Un groupe filtrant (1) selon la Déclaration 1 ou 2, **caractérisé par** la plaque (5) qui comprend au moins un élément filtrant (6) sur celle-ci.

4. Un groupe filtrant (1) selon l'une quelconque des déclarations précédentes, **caractérisé par** au moins deux corps emboîtés (3).

5. Un groupe filtrant (1) selon l'une quelconque des déclarations précédentes, **caractérisé par** le boîtier (7) qui se présente sous la forme d'une boîte creuse dont au moins un côté est ouvert.

6. Un groupe filtrant (1) selon l'une quelconque des déclarations précédentes, **caractérisé par** le boîtier (7) qui comprend au moins une fente et par le corps (3) qui comprend au moins une protubérance apte à pénétrer dans ladite fente.

7. Un groupe filtrant (1) selon l'une quelconque des déclarations précédentes, **caractérisé par** le boîtier (7) qui comprend une base inclinée presque à l'extrémité de laquelle l'ouverture de sortie (8) est positionnée.

8. Un groupe filtrant (1) selon l'une quelconque des déclarations précédentes, **caractérisé par** le boîtier (7) qui comprend au moins un trou de ventilation sur celui-ci qui permet l'entrée et la sortie de l'air.

9. Un groupe filtrant (1) selon l'une quelconque des déclarations précédentes, dont au moins une partie comprend un matériau de revêtement antimicrobien.

10. Une machine à laver et/ou à sécher le linge comprenant un groupe filtrant (1) selon l'une quelconque des déclarations précédentes.
